(19)

Europäisches
Patentamt
European
Patent Office
Office européen
des brevets

(11) **EP 4 760 526 A1**

(12) **EUROPEAN PATENT APPLICATION**

(43) Date of publication:
**17.06.2026 Bulletin 2026/25**

(21) Application number: **25223598.1**

(22) Date of filing: **15.12.2025**

(51) International Patent Classification (IPC):
**G06F 16/25** (2019.01)    **G06F 16/38** (2019.01)
**G06F 11/34** (2006.01)

(52) Cooperative Patent Classification (CPC):
**G06F 16/258; G06F 16/38;** G06F 11/3476

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 US 202463734240 P
03.12.2025 US 202519405647**

(71) Applicant: **Dynatrace LLC
Boston, Massachusetts 02210 (US)**

(72) Inventor: **SHAMOV-LIIVER, Juri
Linz (AT)**

(74) Representative: **Steffens, Adrian
Boehmert & Boehmert
Anwaltspartnerschaft mbB
Pettenkoferstraße 22
80336 München (DE)**

(54) **EXTRACTING DATA FROM TEXTUAL RECORDS**

(57)    A computer-implemented method is presented for extracting data from textual records. The objective of the disclosure is to identify the most appropriate pattern in a set of patterns for extracting data from data records and by applying the most appropriate pattern to a plurality of data records, to robustly extract data from textual records.

Fig. 8

## Description

Field

The present disclosure relates to a computer-implemented method for extracting data from textual records.

Background

Computing entities and applications running on computing entities produce application performance and monitoring (short APM) data, such as log messages, metrics data, entity data etc. documenting data processing. Due to the inhomogeneity of APM data, APM data is typically generated as text. Large amounts of APM data are stored in a database. Before ingesting data into the database, portions of produced APM data, such a timestamps, IP addresses, status codes etc. are extracted from records of APM data and converted into the most appropriate format. In the database, e.g., timestamps may be stored as LONGs, Boolean values as single bit values etc. For extracting data from known sources, users typically have various extraction patterns available. Due to the large number of different applications and computing entities, it is difficult for users to identify the most appropriate pattern for extracting data from textual records. In the prior art it is unknown how to improve this situation.

This section provides background information related to the present disclosure which is not necessarily prior art.

Summary

The objective of the disclosure is to identify the most appropriate pattern in a set of patterns for extracting data from data records and by applying the most appropriate pattern to a plurality of data records, to robustly extract data from textual records. Compared to other patterns in the set of patterns for extracting data, the most appropriate pattern shall extract more portions of data and/or more specific data from textual records.

The objective technical problem is solved by a computer-implemented method for extracting data from data records according to claim 1. Advantageous embodiments are described in the dependent claims.

The problem is solved by a computer-implemented method for extracting data from data records, comprising: receiving, by a computer processor, a reference record, where the reference record is indicative of format of a data record in a plurality of data records; receiving, by the computer processor, a set of patterns for extracting data from data records, where each pattern defines a format for a data record and differs from the formats defined by the other patterns in the set of patterns; for each pattern in the set of patterns, computing a matching metric, mRatio, between the reference record and a given pattern in the set of patterns, where the matching metric indicates a relationship between the number of bytes, lengthMatch, in the reference record matching the format defined by the given pattern and a total number of bytes, lengthTotal, comprising the reference record; for each pattern in the set of patterns, computing a specificity metric, sRatio, between the reference record and the given pattern in the set of patterns, where the specificity metric measures specificity of format defined by the given pattern in relation to the total number of bytes, lengthTotal, comprising the reference record; selecting a particular pattern from the set of patterns using the matching metric and the specificity metric for each of the patterns in the set of patterns; and extracting data from data records in the plurality of data records using the particular pattern.

According to an advantageous embodiment, the matching metric is defined as

$$mRatio = \frac{lengthMatch}{lengthTotal}$$

wherein lengthMatch is the number of bytes in the reference record matching the format defined by the given pattern, and length Total is the total number of bytes comprising the reference record. Lengths can e.g., be measured in numbers of bytes, bits or characters.

It is beneficial to define the specificity metric defined as

$$sRatio = \frac{S_1 + S_2 + S_3}{lengthTotal \cdot f(S_1)}$$

wherein $S_1$ is a number of expressions in the given pattern assigned to variables, $S_2$ is a weight based on data type of expressions in the given pattern assigned to variables, $S_3$ is a number of expressions in the given pattern unassigned to variables, lengthTotal is the number of bytes in the reference record, and $f(S_1)$ is a second weight.

Preferably, S2 is a sum of weights, where each unique data type in expressions in the given pattern is assigned a weight and the value of an assigned weight depends on a data type of the expression.

The second weight is preferably defined as

$$f(S_1) = \begin{cases} 10 & S_1 = 0 \\ 1 & S_1 > 0 \end{cases}$$

According to a very preferred embodiment of the disclosure, selecting a particular pattern further comprises calculating a fitness score for each pattern in the set of patterns and selecting pattern in the set of patterns having the highest fitness score as the particular pattern, where the fitness score is a mathematical function of the matching metric and the specificity metric.

In one very appropriate embodiment, the fitness score, pScore, is calculated by multiplying the matching metric with the specificity metric

$$pScore = mRatio \cdot sRatio$$

Further areas of applicability will become apparent from the description provided herein. The description and specific examples in this summary are intended for purposes of illustration only and are not intended to limit the scope of the present disclosure.

Drawings

The drawings described herein are for illustrative purposes only of selected embodiments and not all possible implementations, and are not intended to limit the scope of the present disclosure.

FIG. 1     shows a first textual reference record RR1,
FIG. 2     shows seven patterns #1...#7 for extracting data from textual records,
FIG. 3     shows several textual records R1... RN from which data shall be extracted,
FIG. 4     shows a second textual reference record RR2,
FIG. 5     shows two patterns #11, #12 for extracting data from textual records,
FIG. 6     shows a third textual reference record RR3,
FIG. 7     shows two patterns #21, #22 for extracting data from textual records, and
FIG. 8     shows the collection of APM data in a distributed computing environment.

Corresponding reference numerals indicate corresponding parts throughout the several views of the drawings.

Detailed description

Example embodiments will now be described more fully with reference to the accompanying drawings.

In a distributed computing environment, multiple computing entities are linked together by a network allowing communication between the entities. The operating systems of the computing entities, applications running on the computing entities, computing hosts and computing containers etc. connected to the computing entities, produce application performance and monitoring (short APM) data, such as log messages, metrics data, entity data etc. thereby documenting the processing of data in the computing environment. In addition, network entities, such as routers, firewalls, switches etc. produce APM data too. Since APM data originates at different computing entities, different applications and different types of devices, APM data is very inhomogeneous. In order to allow the analysis of APM data, APM data is generally generated in textual form thereby allowing humans - at least in principle - to understand the data.

Since critical events occurring in the computing system are in many cases not detected in real time, APM data is stored in a database to allow the analysis of events later. E.g., an attack by a rogue party to the computing system may be detected only after data is stolen, modified or deleted on the computing system. In order to understand how the attacker managed to access the computing system, detailed analysis of APM data is necessary.

Although APM data is generated as text, the data is typically not stored in textual format in the database. E.g., the timestamp '2023-11-25T20:01:43.554PST' comprised in a log line is typically not stored as text but e.g., as Unix timestamp 1700971303, effectively reducing 26 bytes to a LONG of 4 bytes. Storing data in the appropriate format applies not only to timestamps, but also to doubles, Boolean expressions etc. Thus, there is not just a need to extract the expressions from textual records but also to assign the expressions to correct data types. For many operating systems, applications etc. the format of the produced APM data is known a priori. E.g., the Apache log message [Fri Sep 09 10:42:29.902022 2011] [core:error] [pid 35708:tid 4328636416] [client 72.15.99.187] File does not exist: /usr/local/apache2/htdocs/fav.ico

contains the following information:

- Timestamp [Fri Sep 09 10:42:29.902022 2011]: The exact date and time when the error occurred;
- Log Level [core:error]: The log level indicates that it is an error message from the core module of Apache;
- Process ID and Thread ID [pid 35708:tid 4328636416]: The process ID and thread ID of the Apache process handling the request;
- Client IP [client 72.15.99.187]: The IP address of the client making the request; and
- Error Message 'File does not exist: /usr/local/apache2/htdocs/fav.ico': The specific error indicating that the requested file (fav.ico) was not found in the specified directory.

In many other cases, the format of APM data, is either unknown or even from known sources, may differ considerably, e.g., depending on the log level of data (error log, info log, trace message, warning message etc.) and depending on the system configuration. Thus, even if all the various formats were known in which APM data can occur, there is a need to identify the best fitting or most appropriate pattern for extracting data from APM data, such as log lines.

Next, a general treatise of pattern fitness, meaning the fitness of various patterns for extracting data from textual records, is given before concrete application examples are described in more detail.

Aspects of pattern fitness: How do we measure the fitness of patterns for extracting data from textual records? An intuitive approach might be to compute the ratio between the number of bytes of data in the record successfully matched by a pattern and the total number of bytes in the record itself. If pattern B matches a larger portion than pattern A then we consider pattern B fitter or more applicable than pattern B.

Unfortunately there is an immediate problem with this approach: Every pattern matching language, such as regular expressions RegEx or the Dynatrace Pattern Language DPL, allows the creation of patterns matching data in multiple formats, e.g., see patterns A-D below. For example, pattern A specifying the expression DATA matches any textual record: pattern A: DATA

Let us consider the following textual record, consisting of three expressions, namely a timestamp, an IP-address and an integer, where adjacent expressions are separated by space characters:
Record: 2023-11-25T20:01:43.554Z 192.168.1.0 404

If we now compare pattern A to pattern B:

pattern B: DATA' ' DATA' ' DATA
we notice that both patterns match 100% of the textual record. However, it is obvious that pattern B is fitter than pattern A since it contains more expressions matching the record much closer to its actual format. In other words, pattern B is more specific by count of expressions.

Another important aspect of pattern fitness are data types. To illustrate this, let us consider pattern C:
pattern C: JSONTIMESTAMP ' ' IPADDR ' ' INT

It is immediately clear that pattern C is more specific than pattern B. While both patterns comprise the same number of expressions, pattern C is more specific since parts in the textual record need to match the specific data types JSONTIMESTAMP, IPADDR and INT in the pattern.

Another aspect deals with the number of assigned expressions, i.e., the number of expressions in the pattern assigned to variables. With respect to flexible schema, also known as agnostic schema, patterns that do not assign expressions in the pattern to variables are of limited use. For this, let us we consider pattern D:
pattern D: JSONTIMESTAMP:event_time ' ' IPADDR:ip_address ' ' INT:response_code which contains two spaces and three expressions with specific data types thereby assigning matching parts in the record to the variables event_time, ip_address, and response_code, respectively. Thus, pattern D is fitter than pattern C.

All these aspects are considered in the disclosed method for extracting data from textual records which will be described in detail in the following application examples:
The fitness of a pattern is defined by its pattern fitness score, *pScore,* where *pScore* is the product of a match ratio, *mRatio,* and a specificity ratio, *sRatio,* of the pattern.

$$pScore = mRatio \cdot sRatio$$

The match ratio, *mRatio,* is further defined as the ratio between the matching length, *lengthMatch,* of data in the reference record successfully matched by the respective pattern, and the total length, *lengthTotal,* of the reference record itself. The lengths can, e.g., be measured in bytes, numbers of characters etc. Typically, *lengthMatch* is the number of bytes of data in the reference record successfully matched by the pattern. Expressed mathematically

$$mRatio = \frac{lengthMatch}{lengthTotal}$$

If the respective pattern does not match the reference record, the matching length, *lengthMatch,* is 0. The specificity ratio, *sRatio,* is further defined as the number of expressions, S1, in the pattern assigned to variables, the sum, S2, of weights of unique data types for expressions in the pattern assigned to variables, and the number of expressions, S3, in the pattern unassigned to variables divided by the product of the length of the reference record, *lengthTotal,* and the function f for the argument S1, i.e. the number of expressions in the pattern assigned to variables. In mathematical terms, the specificity ratio, *sRatio,* is

$$sRatio = \frac{S_1 + S_2 + S_3}{lengthTotal \cdot f(S_1)}$$

$$f(S_1) = \begin{cases} 10 & S_1 = 0 \\ 1 & S_1 > 0 \end{cases}$$

The variable $S_1$ represents the number of expressions in the pattern assigned to variables. E.g., if no expression in the pattern is assigned to a variable, $S_1$=0. If a single expression is assigned to a variable, $S_1$=1 and so forth.

The variable $S_3$ represents the number of expressions in the pattern that are not assigned to variables. E.g., if the pattern comprises two expressions not assigned to variables then $S_3$=2. In other words, the variable $S_3$ is equal to the total number of expressions in the pattern minus the number of expressions in the pattern assigned to variables $S_1$.

Finally, the variable $S_2$ represents the sum of weights of unique data types for expressions in the pattern assigned to variables. E.g., if there is a first expression assigned to variable, a space, and a second expression unassigned to a variable in the pattern, and the data types of both expressions have a weight of 2 each then only the weight 2 of the data type of the expression assigned to a variable is taken into account. Hence, $S_2$=2. Let us give another example: If there is one expression assigned to variable having the data type INTEGER, a separator, and a second expression assigned to another variable also having the data type INTEGER in the pattern, and the data type INTEGER has a weight of 2 then only the weight 2 of one expression (as both expressions have the same data type) assigned to a variable is taken into account. Hence also in this case, $S_2$=2. Finally, let us give one more example: If there is one expression assigned to a variable having the data type TIMESTAMP, a separator, and a second expression assigned to another variable having the data type INTEGER in the pattern, and the data types TIMESTAMP and INTEGER each have a weight of 2 then the weight 2 of the first expression and the weight 2 of the second expression assigned to variables are taken into account. Hence in this case, $S_2$=4.

Combining the expressions for the pattern fitness score yields:

$$pScore = mRatio \cdot sRatio = \frac{lengthMatch}{lengthTotal} \frac{S_1 + S_2 + S_3}{lengthTotal \cdot f(S_1)}$$

$$pScore = \frac{lengthMatch}{lengthTotal^2} \cdot \frac{S_1 + S_2 + S_3}{f(S_1)}$$

Note that the second term, (S1+S2+S3)/f(S1), depends on the pattern only and does not depend on the pattern successfully matching the reference record. Thus, it is possible to calculate this term in advance and store it in the pattern repository. By doing so, the pattern fitness score, *pScore,* can be calculated quicker by multiplying the first term, lengthMatch/lengthTotal$^2$, with the second term.

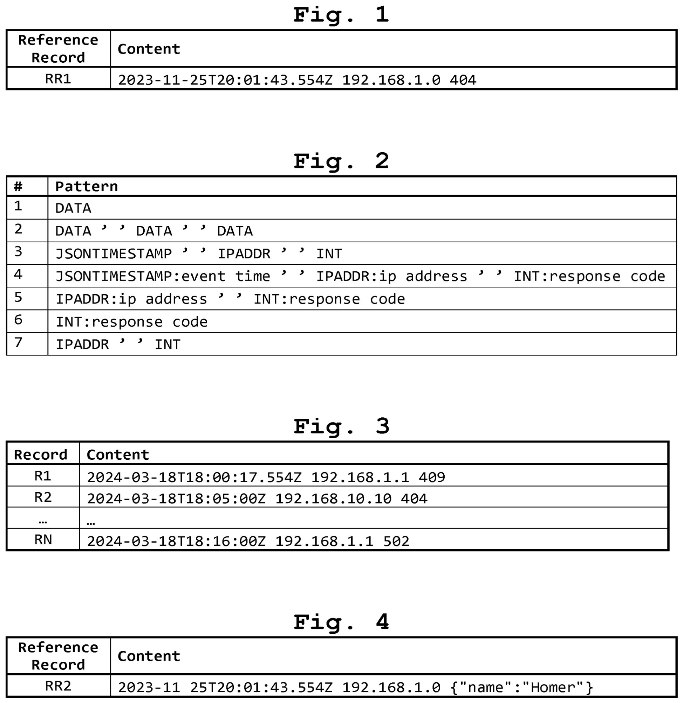

In a first application example, a reference record RR1 = '2023-11-25T20:01:43.554Z 192.168.1.0 404' (see also Fig. 1) is used to determine the most appropriate pattern for extracting data from records. The higher the similarity between the reference record and the records from which data shall be extracted, the more portions of data and/or the more specific is the data extracted from the records. It is noted that both the reference record RR1 and the other records R1...RN are available in textual form only, i.e. as strings. After having determined the best fitting pattern for data extraction, data is extracted from the textual records and typically stored in a database. In the database, data is stored in its most appropriate form, i.e. textual data such as text in log lines are stored as text, whereas integers, shorts, longs, floats, doubles, timestamps, IP-addresses etc. in log lines are typically stored in binary form. Besides recognizing the correct data type, it is important to extract the correct portions of data from records. As many different data types and many different formats in application performance monitoring and observability data exist, likewise many different patterns for data extraction exist. The computer aided selection of patterns for data extraction shall i. reduce the number of errors by proposing and optionally selecting the most appropriate pattern and ii. speed up the selection of the most appropriate pattern.

Let us assume that the user performing data extraction from records has seven patterns available in a pattern repository, see Tab. 1 and Fig. 2:

*Tab. 1 Pattern repository*

| # | Pattern |
|---|---------|
| 1 | DATA |
| 2 | DATA ' ' DATA ' ' DATA |
| 3 | JSONTIMESTAMP ' ' IPADDR ' ' INT |
| 4 | JSONTIMESTAMP:event time ' ' IPADDR:ip address ' ' INT:response code |
| 5 | IPADDR:ip address ' ' INT:response code |
| 6 | INT:response code |
| 7 | IPADDR ' ' INT |

The disclosed method analyzes the patterns in the repository and selects the best fitting pattern for extracting data from the records. The patterns #1 to #7 featuring elementary data types will be discussed one by one:
The first pattern #1 comprises a single expression specifying the universal data type DATA.

This data type accepts data in all binary and non-binary data types. Thus, pattern #1 matches the reference textual record RR1 in its entirety and maps RR1 to the single expression DATA in the pattern:

*Tab. 2 Applying pattern #1 to RR1*

| Data type | Variable | Contents |
|-----------|----------|----------|
| **Original record** | | |
| (Text) | RR1 | 2023-11-25T20:01:43.554Z 192.168.1.0 404 |
| **Matching data in record** | | |
| DATA | -- | 2023-11-25T20:01:43.554Z 192.168.1.0 404 |

Note that "(Text)" in the table indicates that the reference record RR1 is a textual record as Text is not a data type.

The match ratio, *mRatio,* of the pattern is defined as $mRatio = \frac{lengthMatch}{lengthTotal}$ ,where lengthMatch is the number of bytes of data in the reference record successfully matched by the pattern and lengthTotal is the total number of bytes of the reference record RR1. For pattern #1, lengthMatch = lengthTotal = 42, hence mRatio = 1.

Although RR1 can be mapped in its entirety to pattern #1, in other words, the data in the reference record RR1 successfully matched by the pattern has the same length as reference record itself, the expression in the pattern is not assigned to a variable for further processing. Assigning an expression in the pattern to a variable is indicated by appending a colon and the name of the variable to the expression. In pattern #1, the expression DATA in the pattern is not assigned to a variable, as a colon and the name of a variable are missing. Thus, the variable $S_1$ denoting the number of expressions in the pattern assigned to variables is 0, $S_1 = 0$. As pattern #1 does not assign any expressions to variables, also the sum of weights of unique data types in the pattern assigned to variables is 0, $S_2 = 0$. $S_3$ counts the number of expressions in the pattern unassigned to variables. As pattern #1 comprises a single expression that is not assigned to a variable, $S_3 = 1$.

The specificity ratio sRatio of the pattern is defined as *sRatio* $sRatio = \frac{S_1+S_2+S_3}{lengthTotal \cdot f(S_1)}$, where the function f($S_1$) is $f(S_1) = \begin{cases} 10 & S_1 = 0 \\ 1 & S_1 > 0 \end{cases}$ .

As $S_1 = 0$, f($S_1$) is 10. Thus, sRatio for pattern #1 is 1/(42*10) = 0.00238. Finally, the pattern fitness score is defined as the product of the match ratio mRatio and the specificity ratio sRatio, *pScore = mRatio · sRatio.* Hence, pattern #1 has a pattern fitness score pScore = 0.00238.

The next pattern #2 comprises two literal expressions for single space characters and three expressions having the universal data type DATA as in "DATA space DATA space DATA".

Parsing RR1 for the spaces divides RR1 in three parts, namely a first part "2023-11-25T20:01:43.554Z", a second part "192.168.1.0" and a third part "404". It is noted that the order of parsing is irrelevant, as parsing RR1 for the first blank thereby dividing RR1 into a part 1 and a part 2, and then parsing part 2 for the second blank thereby dividing part 2 into a part 2a and a part 2b, as opposed to parsing RR1 for two blanks thereby dividing RR1 into part 1, part 2 and part 3 has the same result.

Also pattern #2 matches the reference record RR1 in its entirety:

*Tab. 3 Applying pattern #2 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| DATA | -- | 2023-11-25T20:01:43.554Z 192.168.1.0 |
| -- | -- | ' ' |
| DATA | -- | 192.168.1.0 |
| -- | -- | ' ' |
| DATA | -- | 404 |

As RR1 can be mapped in its entirety to pattern #2, mRatio = 1. Furthermore, as no expression in the pattern was assigned to a variable, S1 = 0 and S2 = 0. The number of expressions in the pattern unassigned to variables is 5 including the space characters between the 1st and 2nd parts and the 2nd and 3rd parts, S3 = 5. Since S1 = 0, the function f(S1) = 10. Hence, the specificity ratio sRatio = 5/42/10 = 0.0119 and the pattern fitness score pScore = 0.0119. The next pattern #3 comprises two literal expressions for single space characters and three expressions having the data types JSONTIMESTAMP, IPADDR and INT, respectively.

As described for pattern #2, the reference record RR1 can be split into a first, second and third part separated by space characters. Also pattern #3 successfully matches the reference record RR1 in its entirety. The 1st part matches a JSON timestamp JSONTIMESTAMP, the 2nd part an IP address IPADDR, and the 3rd part an integer INT (see Tab. 4):

*Tab. 4 Applying pattern #3 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| JSONTIMESTAMP | -- | 2023-11-25T20:01:43.554Z 192.168.1.0 |
| -- | -- | ' ' |
| IPADDR | -- | 192.168.1.0 |
| -- | -- | ' ' |
| INT | -- | 404 |

As pattern #3 matches RR1 in its entirety, the match ratio is 1, mRatio = 1. Likewise, as no expression in the pattern is assigned to a variable, S1 = 0 and S2 = 0, and the number of expressions in the pattern unassigned to variables is 5 including spaces, S3 = 5. The function f(S1) = 10 since S1 = 0. Hence, the specificity ratio, *sRatio,* is sRatio = 5/42/10 = 0.0119 and the pattern fitness score, *pScore,* is pScore = 0.0119. This result may appear surprising since the pattern fitness score for patterns #2 and #3 are equal although pattern #3 contains specific data types. Assuming agnostic schema, it is necessary to assign expressions to variables to allow further processing of the data. As in both patterns #2 and #3 the number of expressions in the pattern that are assigned to variables is 0 (S1 = 0), the value of the patterns is still very limited. Thus, the disclosed method assigns rather low pattern fitness scores to both patterns.

The effect of assigning expressions in a pattern to variables is shown in pattern #4. This pattern comprises two literal expressions for single space characters and three expressions having the data types JSONTIMESTAMP, IPADDR and INT, respectively. The expression JSONTIMESTAMP is assigned to the variable "event time", the expression IPADDR to the variable "ip address", and the expression INT to the variable "response code".

As described for pattern #2, the reference record RR1 can be split into a first, second and third part separated by space characters. Also pattern #4 successfully matches the reference record RR1 in its entirety, as the 1st part matches a JSON timestamp JSONTIMESTAMP, the 2nd part an IP address IPADDR, and the 3rd part an integer INT (see Tab. 5):

*Tab. 5 Applying pattern #4 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| JSONTIMESTAMP | event time | 2023-11-25T20:01:43.554Z 192.168.1.0 |
| -- | -- | ' ' |
| IPADDR | ip address | 192.168.1.0 |
| -- | -- | ' ' |
| INT | response code | 404 |

As RR1 can be mapped to pattern #4 in its entirety, mRatio = 1. However, this time expressions in the pattern are assigned to the variables "event time", "ip address", and "response code". Hence, S1 = 3. S2 counts the sum of the unique transformation type weights in the expressions assigned to variables. As only unique transformation type weights are summed up, the weight of every data type is counted only once. The weights are defined as follows:

*Tab. 6 Weights of different data types*

| Weight | Data type |
|---|---|
| 2 | Statically evaluated data types, BOOLEAN, INT, LONG, DOUBLE, DURATION, TIMESTAMP, IPADDR, ARRAY |
| 11 | Dynamically evaluated data types, such as JSON, KVP |

As the data type JSONTIMESTAMP is a specific type of TIMESTAMP, its contribution is 2, IPADDR contributes 2 and INT contributes 2 to the sum of weights of unique data types. Thus, S2 = 6. Due to the three data extractions, the number of expressions unassigned to variables is 2, S3 = 2. Considering f(S1) = 1, the specificity ratio is sRatio = (3+6+2)/(42*1) = 0.262 and the pattern fitness score is pScore = 0.262.

Next, the fitness of pattern #5 is analyzed. The pattern comprises one literal expression for a single space character and two expressions having the data types IPADDR and INT, respectively.

Dividing the record by the first single space character yields a first part "2023-11-25T20:01:43.554Z" and a second part "192.168.1.0 404". Next it is attempted to match pattern #5 to the reference record RR1. Matching is done from left to right. As the first part cannot be mapped to an IP-address, the matching process is immediately stopped with no matching expressions (see Tab. 7). Note that if any expression fails to match, the matching process for the whole pattern is considered to be failed.

*Tab. 7 Applying pattern #5 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| | | |
| | | ' ' |

(continued)

| Matching data in record | | |
|---|---|---|
| | | |

As there is no matching data in the record RR1, the match ratio mRatio = 0. Consequently, also the pattern fitness score is 0.

The evaluation continues with pattern #6. The pattern comprises a single expression 'INT:response code' having the data type INT, where the expression is assigned to the variable response code. Thus, it is attempted to match pattern #6 to the reference record RR1.

We assume that RR1 matches the integer '2023'. Hence, the value 2023 is assigned to the variable "response code". As the pattern does not specify anything in addition, data extraction is stopped.

*Tab. 8 Applying pattern #6 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| INT | response code | 2023 |

The match ratio is given by the ratio between the number of bytes in RR1 successfully matched by the pattern divided by the total number of bytes in RR1. As only four bytes "2023" of RR1 matched, mRatio = 4/42 = 0.0952. The number of expressions in the pattern assigned to variables is 1, S1 = 1. The weight of the data type INT is 2, hence S2 = 2. As the pattern #6 does not contain any unassigned expressions, S3 = 0. Since S1 = 1, f(S1) = 1 and the specificity ratio sRatio = 3/42/1 = 0.0714. Consequently, the pattern fitness score for pattern #6 is pScore = 0.00680.

Lastly, pattern #7 is investigated. As the pattern defines a first expression with data type IPADDR, then a literal expression for a single space character and an expression having data type INT, the parser engine attempts to match the first part of RR1 to the data type IPADDR. Matching is done from left to right. Thus, it is attempted to match the leftmost part starting at the first byte or first character of RR1 to the data type IPADDR. Matching fails since the data type IPADDR does not allow a minus character. Thus, the matching process for the entire pattern is stopped (see Tab. 9):

*Tab. 9 Applying pattern #7 to RR1*

| Data type | Variable | Contents |
|---|---|---|
| **Original record** | | |
| (Text) | RR1 | 2023-11-25T20:01:43.554Z 192.168.1.0 404 |
| **Matching data in record** | | |
| | | |
| | | |
| | | |

As there are no matching expressions, the match ratio is zero, mRatio = 0. Consequently, also the pattern fitness score is 0.

In summary, the analysis of patterns #1...#7 results in the following pattern fitness scores pScore:

*Tab. 10 Pattern fitness scores for patterns #1...#7*

| Pattern | mRatio | S1 | S2 | S3 | sRatio | pScore |
|---|---|---|---|---|---|---|
| #1 | 1 | 0 | 0 | 1 | 0.00238 | 0.00238 |
| #2 | 1 | 0 | 0 | 5 | 0.0119 | 0.0119 |
| #3 | 1 | 0 | 0 | 5 | 0.0119 | 0.0119 |

(continued)

| Pattern | mRatio | S1 | S2 | S3 | sRatio | pScore |
|---------|--------|----|----|----|--------|--------|
| #4 | 1 | 3 | 6 | 2 | 0.262 | 0.262 |
| #5 | 0 | 2 | 4 | 1 | 0.167 | 0 |
| #6 | 0.095 | 1 | 2 | 0 | 0.0714 | 0.00680 |
| #7 | 0 | 0 | 0 | 3 | 0.0714 | 0 |

Sorting the patterns by pScore in descending order results in:

*Tab. 11 Patterns sorted by pattern fitness score pScore*

| Pattern | #4 | #2 | #3 | #6 | #1 | # 5 | # 7 |
|---------|-----|------|------|--------|--------|-----|-----|
| **pScor e** | 0.26 2 | 0.011 9 | 0.011 9 | 0.0068 0 | 0.0023 8 | 0 | 0 |

The analysis yields that pattern #4 is best fitting pattern for extracting data from records. Typically, the user takes the best fitting patter 4 unamended and uses it to extract data from multiple records coming from a production system. It is, of course, also possible to amend the patterns further in order to increase the pattern fitness score of the pattern and thereby get better results.

Let us now assume that the user wants to extract data from the following records R1, R2... RN (see Tab. 12 and Fig. 3):

*Tab. 12 List of records*

| # | Record |
|----|--------|
| R1 | 2024-03-18T18:00:17.554Z 192.168.1.1 409 |
| R2 | 2024-03-18T18:05:00Z 192.168.10.10 404 |
| | |
| RN | 2024-03-18T18:16:00Z 192.168.1.1 502 |

After data extraction, the extracted data shall be saved in a database.

Using the best fitting pattern #4 for extracting data from these records yields the following data to be input into the database:

*Tab. 13 Results from data extraction*

| # | Variable | Extracted data | Data type |
|-----|---------------|---------------------------|----------------|
| R 1 | event time | 2024-03-18T18:00:17.554Z | JSONTIMESTAMP |
| | ip address | 192.168.1.1 | IPADDR |
| | response code | 409 | INT |
| R 2 | event time | 2024-03-18T18:05:00Z | JSONTIMESTAMP |
| | ip address | 192.168.10.10 | IPADDR |
| | response code | 404 | INT |
| | | | |
| R N | event time | 2024-03-18T18:16:00Z | JSONTIMESTAMP |
| | ip address | 192.168.1.1 | IPADDR |
| | response code | 502 | INT |

As the numerical values for S1, S2, S3, and f(S1) depend on the patterns only (and not on the reference record), it is beneficial to store the term $\frac{S1 + S2 + S3}{f(S1)}$ in the pattern repository. Doing this, speeds up the analysis of patterns considerably since the pattern fitness score, *pScore,* is the product of lengthMatch/lengthTotal$^2$ and the term.

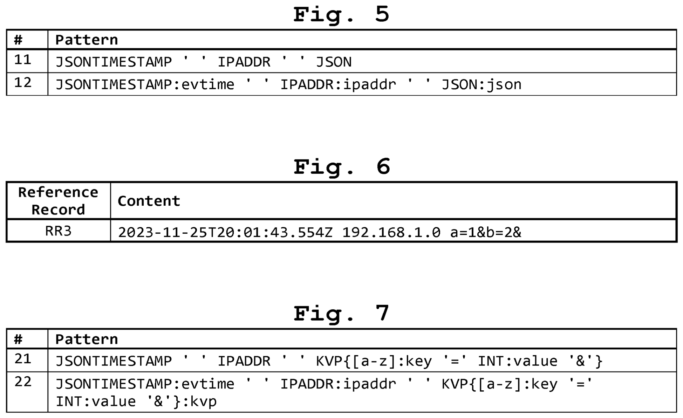

In a second application example, another reference record 'RR2 = 2023-11 25T20:01:43.554Z 192.168.1.0 {"name":"Homer"}' (see Fig. 4) is used to analyze the fitness of patterns in a repository (Tab. 14 and Fig. 5):

*Tab. 14 Pattern repository*

| # | Pattern |
|---|---------|
| 11 | JSONTIMESTAMP ” IPADDR ’ ’ JSON |
| 12 | JSONTIMESTAMP:evtime ’ ’ IPADDR:ipaddr ’ ’ JSON:json |

Compared to the rather simple patterns in Tab. 1, the patterns in Tab. 14 are more complicated due to dynamically allocated data type JSON according to the JavaScript Object Notation (short JSON).

The analysis starts with pattern #11: This pattern defines three expressions, expression 1 having the data type JSONTIMESTAMP (short for time stamp in JSON format), a space character, expression 2 having the data type IPADDR (short for IP address), another space character, and expression 3 having the data type JSON.

As pattern #11 defines two spaces as separators, RR2 is divided into three parts, namely a first part beginning with the 1$^{st}$ byte up to the first space, a second part starting from the 1$^{st}$ byte after the first space up to the second space, and a third part starting from the 1$^{st}$ byte after the second space (see below):

*Tab. 15 Applying pattern #11 to RR2*

| Data type | Variable | Contents |
|-----------|----------|----------|
| **Original record** | | |
| (Text) | RR2 | 2023-11-25T20:01:43.554Z 192.168.1.0 {"name":"Homer"} |
| **Matching data in record** | | |
| JSONTIMESTAMP | -- | 2023-11-25T20:01:43.554Z |
| -- | -- | ’ ’ |
| IPADDR | -- | 192.168.1.0 |
| -- | -- | ’ ’ |
| JSON | -- | {"name":"Homer"} |

As the first part matches a JSONTIMESTAMP, the second part an IPADDR, and the third part a general JSON expression, the match ratio, mRatio, is 1, mRatio=1. However, as no expression in the pattern is assigned to a variable, S1 = 0 and S2 = 0. Thus, the number of expressions unassigned to variables is 5 including spaces, S3 = 5. As S1 = 0, f(S1) = 10, resulting in sRatio = (S1+S2+S3)/(lengthTotal*f(S1)) = 5/55/10 = 0.00909. Thus, the patter fitness score is pScore = 0.00909.

The analysis continues with pattern #12. In this pattern, the expressions in pattern #11 are assigned to variables (see below):

*Tab. 16 Applying pattern #12 to RR2*

| Data type | Variable | Contents |
|-----------|----------|----------|
| **Original record** | | |
| (Text) | RR2 | 2023-11-25T20:01:43.554Z 192.168.1.0 {"name":"Homer"} |
| **Matching data in record** | | |
| JSONTIMESTAMP | evtime | 2023-11-25T20:01:43.554Z |
| -- | -- | ’ ’ |
| IPADDR | ipaddr | 192.168.1.0 |
| -- | -- | ’ ’ |
| JSON | json | {"name":"Homer"} |

The 1st matching expression is assigned to the variable evtime, the 2nd matching expression is assigned to the variable ipaddr, and the 3rd matching expression is assigned to the variable json. Thus, the number of expressions assigned to variables is 3, S1 = 3. The unique transformation type weights for JSONTIMESTAMP is 2, for IPADDR is 2, and for JSON is 11. Thus, S2 = 15. Contrary to pattern #11, S3 = 2 since only the two blanks were not assigned to variables. Consequently, f(S1)=1, sRatio = 20/55/1 = 0.364 and the patter fitness score for pattern #12 is pScore = 0.364.

Sorting the patterns by pScore in descending order gives:

*Tab. 17 Patterns sorted by pattern fitness score pScore*

| Pattern | #12 | #11 |
|---|---|---|
| pScore | 0.364 | 0.00909 |

Thus, pattern #12 is fitter than pattern #11 for extracting data from records similar to RR2. After identifying the best fitting pattern, data is extracted from records.

In a third application example, patterns with key-value pairs (KVP) will be investigated. For this, the following reference record RR3 = '2023-11-25T20:01:43.554Z 192.168.1.0 a=1&b=2&' (see also Fig. 6) is used to analyze the fitness of patterns in the pattern repository (see Tab. 18 and Fig. 7):

*Tab. 18 Pattern repository*

| # | Pattern |
|---|---|
| 21 | JSONTIMESTAMP ' ' IPADDR ' ' KVP{[a-z]:key '=' INT:value '&'} |
| 22 | JSONTIMESTAMP:evtime ' ' IPADDR:ipaddr ' ' KVP{[a-z]:key '=' INT:value '&'}:kvp |

The fifth expression in pattern #21 defines a general key-value pair (short KVP), where the key consists of a single letter a...z as key and an integer as value. The key is assigned to the variable key, whereas the value in the key-value pair is assigned to the variable value. Multiple key-value pairs are separated by the ampersand symbol "&". It is noted that the key-value pair itself is not assigned to a variable.

The matching of RR3 according by pattern #21 is as follows:

*Tab. 19 Applying pattern #21 to RR3*

| Data type | Variable | Contents |
|---|---|---|
| **Original record** | | |
| (Text) | RR3 | 2023-11-25T20:01:43.554Z 192.168.1.0 a=1&b=2& |
| **Matching data in record** | | |
| JSONTIMESTAMP | -- | 2023-11-25T20:01:43.554Z |
| -- | -- | ' ' |
| IPADDR | -- | 192.168.1.0 |
| -- | -- | ' ' |
| KVP | -- | a=1&b=2& |

As the reference record RR3 can be mapped in its entirety by pattern #21, the match ratio is 1, mRatio = 1. As the pattern does not assign any expression in the pattern to a variable, both S1 and S2 are 0. The number of unassigned expressions in the pattern is 5 including spaces. As S1 = 0, f(S1) = 10 and the specificity ratio sRatio = 5/47/10 = 0.0106. Consequently, the pattern fitness score pScore = 0.0106.

The matching of RR3 by pattern #22 is as follows:

*Tab. 20 Applying pattern #22 to RR3*

| Data type | Variable | Contents |
|---|---|---|
| **Original record** | | |
| (Text) | RR3 | 2023-11-25T20:01:43.554Z 192.168.1.0 a=1&b=2& |

(continued)

| Matching data in record | | |
|---|---|---|
| JSONTIMESTAMP | evtime | 2023-11-25T20:01:43.554Z |
| -- | -- | ' ' |
| IPADDR | ipaddr | 192.168.1.0 |
| -- | -- | ' ' |
| KVP | kvp | a=1&b=2& |

As RR3 can be mapped to pattern #22 in its entirety, the match ratio is 1, mRatio = 1. The number of expressions in the pattern assigned to variables is 3, S1 = 3, and the sum of unique transformation type weights of expressions assigned to variables is 15 (weights 2 for data types JSONTIMESTAMP and IPADDR; weight 11 for data type KVP), S2 = 15. The sum of expressions in the pattern not assigned to variables is 2 including spaces, S3 = 2. Thus, f(S1) = 1, sRatio = 20/47/1 = 0.426 and the pattern fitness score pScore = 0.426.

Sorting the patterns #21 and #22 in the pattern repository of Tab. 18 by the pattern fitness score, *pScore,* in descending order yields pattern #2 as the best fitting pattern. After identifying the best fitting pattern, data is extracted from records.

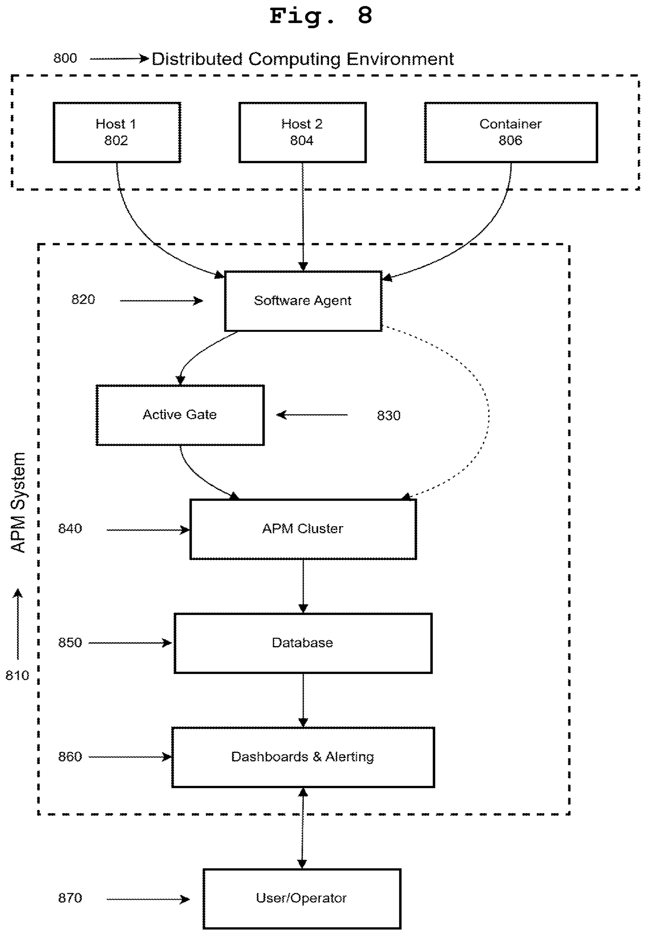

Finally, Fig. 8 schematically illustrates the collection of textual records of APM data by an APM system 810 in a distributed computing environment 800. The APM system 810 utilizes software agents 820 installed on hosts such as servers 802, 804, virtual machines, and containers 806 within the computing environment 800. The software agents 820 automatically instrument applications, services, processes and infrastructure components in the computing environment 800, thereby automatically collecting log data, metrics data, span-data and trace-data, etc. The software agents 820 auto-instrument code at runtime (e.g., Java, .NET, Node.js) such that method calls, database queries, and external service calls are captured without requiring manual code modifications. In addition, software agents 820 inject trace identifiers to requests, such as http requests, traversing the distributed computing environment 800, and propagate context information, enabling end-to-end transaction visibility for operations at different stages in the distributed computing environment 800. The software agents 820 can be proprietary agents or based on open-source solutions, such as OpenTelemetry.

The collected records of APM data are securely transmitted to the APM cluster 840, which may be implemented as a software-as-a-service (SaaS) or managed solution. The APM system 810 may comprise an optional Active Gate 830 that serves as a proxy to enable secure and scalable data transmission, particularly in hybrid or cloud-based configurations. The APM cluster 840 functions as a central backend for ingesting, indexing, analyzing, and storing APM data. Log data is e.g., stored in both raw and aggregated form in a scalable database 850.

Users 870 can query, visualize, and analyze APM data via dashboards, charts, and query language (e.g., DQL). The APM system 810 continuously analyzes textual records of APM data for anomalies, and patterns in order to trigger alerts. The dashboard and alerting component 860 provides a user interface for visualization, querying, and alerting. The APM system 810 correlates metrics-, log-, trace-, and log-data across services and infrastructure using entity identifiers and tags. The architecture is designed to handle millions of metrics per second across thousands of hosts and services.

In summary, the APM system 810 collects textual records of APM data from the distributed computing environment 800 by deploying software agents 820 that instrument applications and infrastructure, aggregate log data with contextual information, transmit log data to a central backend 840, and store them in a database 850 for subsequent analysis, visualization, and alerting 860. The system is designed to provide high scalability, resilience, and deep observability across complex, distributed environments.

The collection of textual records of APM data shown in Fig. 8 supports understanding the technical problem identified in this disclosure -namely, the difficulty of selecting robust extraction patterns and extracting data from textual records of APM data. The steps in this disclosure include receiving a reference record, receiving a set of extraction patterns, computing a matching metric and a specificity metric between the reference record and each pattern in the set of extraction patterns, selecting the most suitable extraction pattern, and extracting data from textual records using the selected extraction pattern. This process is not a mere abstract idea; it is tailored for APM systems that improve the functioning of computer systems by automated pattern selection and automated data extraction from textual records. By implementing these steps on a computer, the invention achieves a practical application - accurate and efficient extraction of data from logs, metrics, traces, and other APM records. More specifically, the disclosure (i) allows the user to re-use previously used and thus proven extraction patterns from a set of extraction patterns, (ii) reduces time for the user to select the most appropriate extraction pattern from the set of patterns, and (iii) ensures that specific data is extracted by applying the selected extraction pattern to multiple data records in a robust manner. By selecting and applying the most appropriate extraction pattern to multiple data records, highly specific data is extracted from the data records in a robust manner. In addition, extracted data can be stored memory efficiently in a database using the most appropriate format.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A computer-implemented method for extracting data from data records, comprising:

   - receiving, by a computer processor, a reference record, where the reference record is indicative of format of a data record in a plurality of data records;
   - receiving, by the computer processor, a set of patterns for extracting data from data records, where each pattern defines a format for a data record and differs from the formats defined by the other patterns in the set of patterns;
   - for each pattern in the set of patterns, computing a matching metric between the reference record and a given pattern in the set of patterns, where the matching metric indicates a relationship between bytes in the reference record matching the format defined by the given pattern and a total number of bytes comprising the reference record;
   - for each pattern in the set of patterns, computing a specificity metric between the reference record and the given pattern in the set of patterns, where the specificity metric measures specificity of format defined by the given pattern in relation to the total number of bytes comprising the reference record;
   - selecting a particular pattern from the set of patterns using the matching metric and the specificity metric for each of the patterns in the set of patterns; and
- extracting data from data records in the plurality of data records using the particular pattern.

2. The method of claim 1, wherein the matching metric is defined as

$$mRatio = \frac{lengthMatch}{lengthTotal}$$

wherein lengthMatch is the number of bytes in the reference record matching the format defined by the given pattern, and length Total is the total number of bytes comprising the reference record.

3. The method of claim 1 or 2, wherein the specificity metric is defined as

$$sRatio = \frac{S_1 + S_2 + S_3}{lengthTotal \cdot f(S_1)}$$

wherein $S_1$ is number of expressions in the given pattern assigned to variables, $S_2$ is a weight based on data type of expressions in the given pattern assigned to variables, $S_3$ is number of expressions in the given pattern unassigned to variables, lengthTotal is number of bytes in the reference record, and $f(S_1)$ is a second weight.

4. The method of claim 3, wherein S2 is a sum of weights, where each unique data type in expressions in the given pattern is assigned a weight and the value of an assigned weight depends on a data type of the expression.

5. The method of claim 3 or 4, wherein the second weight f(S1) is further defined as

$$f(S_1) = \begin{cases} 10 & S_1 = 0 \\ 1 & S_1 > 0 \end{cases}.$$

6. The method of any one of the preceding claims, wherein selecting a particular pattern further comprises calculating a fitness score for each pattern in the set of patterns and selecting pattern in the set of patterns having highest fitness score as the particular pattern, where the fitness score is a mathematical function of the matching metric and the specificity metric.

7. The method of claim 6, wherein the fitness score is calculated by multiplying the matching metric with the specificity metric.

8. A non-transitory computer-readable medium having computer-executable instructions that, upon execution of the instructions by a processor of a computer, cause the computer:

- receive a reference record, where the reference record is indicative of format of a data record in a plurality of data records;
- receive a set of patterns for extracting data from data records, where each pattern defines a format for a data record and differs from the formats defined by the other patterns in the set of patterns;
- for each pattern in the set of patterns, compute a matching metric between the reference record and a given pattern in the set of patterns, where the matching metric indicates a relationship between bytes in the reference record matching the format defined by the given pattern and a total number of bytes comprising the reference record;
- for each pattern in the set of patterns, compute a specificity metric between the reference record and the given pattern in the set of patterns, where the specificity metric measures specificity of format defined by the given pattern in relation to the total number of bytes comprising the reference record;
- select a particular pattern from the set of patterns using the matching metric and the specificity metric for each of the patterns in the set of patterns; and
- extract data from data records in the plurality of data records using the particular pattern.

9. The non-transitory computer-readable medium of claim 8, wherein the matching metric is defined as

$$mRatio = \frac{lengthMatch}{lengthTotal}$$

wherein lengthMatch is the number of bytes in the reference record matching the format defined by the given pattern, and length Total is the total number of bytes comprising the reference record.

10. The non-transitory computer-readable medium of claim 8 or 9, wherein the specificity metric is defined as

$$sRatio = \frac{S_1 + S_2 + S_3}{lengthTotal \cdot f(S_1)}$$

wherein S1 is number of expressions in the given pattern assigned to variables, S2 is a weight based on data type of expressions in the given pattern assigned to variables, S3 is number of expressions in the given pattern unassigned to variables, lengthTotal is number of bytes in the reference record, and f(S1) is a second weight.

11. The non-transitory computer-readable medium of claim 10, wherein S2 is a sum of weights, where each unique data type in expressions in the given pattern is assigned a weight and the value of an assigned weight depends on a data type of the expression.

12. The non-transitory computer-readable medium of claim 10 or 11, wherein the second weight f(S1) is further defined as

$$(S_1) = \begin{cases} 10 & S_1 = 0 \\ 1 & S_1 > 0 \end{cases}.$$

13. The non-transitory computer-readable medium of any one of claims 8 to 12, wherein selecting a particular pattern includes calculating a fitness score for each pattern in the set of patterns and selecting pattern in the set of patterns having highest fitness score as the particular pattern, where the fitness score is a mathematical function of the matching metric and the specificity metric.

14. The non-transitory computer-readable medium of claim 13 wherein the fitness score is calculated by multiplying the matching metric with the specificity metric.

## Fig. 1

| Reference Record | Content |
|---|---|
| RR1 | 2023-11-25T20:01:43.554Z 192.168.1.0 404 |

## Fig. 2

| # | Pattern |
|---|---|
| 1 | DATA |
| 2 | DATA ' ' DATA ' ' DATA |
| 3 | JSONTIMESTAMP ' ' IPADDR ' ' INT |
| 4 | JSONTIMESTAMP:event time ' ' IPADDR:ip address ' ' INT:response code |
| 5 | IPADDR:ip address ' ' INT:response code |
| 6 | INT:response code |
| 7 | IPADDR ' ' INT |

## Fig. 3

| Record | Content |
|---|---|
| R1 | 2024-03-18T18:00:17.554Z 192.168.1.1 409 |
| R2 | 2024-03-18T18:05:00Z 192.168.10.10 404 |
| … | … |
| RN | 2024-03-18T18:16:00Z 192.168.1.1 502 |

## Fig. 4

| Reference Record | Content |
|---|---|
| RR2 | 2023-11 25T20:01:43.554Z 192.168.1.0 {"name":"Homer"} |

## Fig. 5

| # | Pattern |
|---|---------|
| 11 | JSONTIMESTAMP ' ' IPADDR ' ' JSON |
| 12 | JSONTIMESTAMP:evtime ' ' IPADDR:ipaddr ' ' JSON:json |

## Fig. 6

| Reference Record | Content |
|---|---------|
| RR3 | 2023-11-25T20:01:43.554Z 192.168.1.0 a=1&b=2& |

## Fig. 7

| # | Pattern |
|---|---------|
| 21 | JSONTIMESTAMP ' ' IPADDR ' ' KVP{[a-z]:key '=' INT:value '&'} |
| 22 | JSONTIMESTAMP:evtime ' ' IPADDR:ipaddr ' ' KVP{[a-z]:key '=' INT:value '&'}:kvp |

# Fig. 8

800 ——————→ Distributed Computing Environment

| Host 1 802 | Host 2 804 | Container 806 |

APM System

820 —————→ Software Agent

Active Gate ←———— 830

840 —————→ APM Cluster

850 —————→ Database

860 —————→ Dashboards & Alerting

810

870 —————→ User/Operator

Europäisches
Patentamt

European
Patent Office

Office européen
des brevets

# EUROPEAN SEARCH REPORT

**Application Number**

EP 25 22 3598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/403387 A1 (IDE TAKAYA [JP]) 5 December 2024 (2024-12-05) <br> * paragraphs [0005] - [0006] * <br> * paragraphs [0034], [0041] - [0048]; figure 2 * <br> * paragraphs [0087] - [0098]; figure 9 * <br> * paragraphs [0099] - [0101]; figure 10 * <br> ----- | 1-14 | INV. <br> G06F16/25 <br> G06F16/38 <br> G06F11/34 |
| X | DEBNATH BIPLOB ET AL: "LogLens: A Real-Time Log Analysis System", 2018 IEEE 38TH INTERNATIONAL CONFERENCE ON DISTRIBUTED COMPUTING SYSTEMS (ICDCS), [Online] 1 July 2018 (2018-07-01), pages 1052-1062, XP093390792, DOI: 10.1109/icdcs.2018.00105 Retrieved from the Internet: URL:https://bzong.github.io/doc/icdcs-18.pdf> <br> * page 1052, left-hand column, last paragraph - page 1053, left-hand column, paragraph 1 * <br> * page 1053, right-hand column, paragraph 4 - page 1054, right-hand column, paragraph 1; figure 1 * <br> * page 1054, right-hand column, paragraph 3 - page 1056, left-hand column, paragraph 4 * <br> * page 1056, left-hand column, paragraph 5 - right-hand column, paragraph 5 * <br> ----- | 1-14 | |

**TECHNICAL FIELDS SEARCHED (IPC)**

G06F

The present search report has been drawn up for all claims

| Place of search | Date of completion of the search | Examiner |
|---|---|---|
| Munich | 24 April 2026 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3598

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | Publication date | Patent family member(s) | | Publication date |
|---|---|---|---|---|
| US 2024403387 A1 | 05-12-2024 | JP | 2024170942 A | 11-12-2024 |
| | | US | 2024403387 A1 | 05-12-2024 |

For more details about this annex : see Official Journal of the European Patent Office, No. 12/82